(19) Europäisches Patentamt

European Patent Office

Office européen des brevets

(11) Publication number: **0 278 777 B1**

# EUROPEAN PATENT SPECIFICATION

(45) Date of publication of patent specification: **15.12.93**　(51) Int. Cl.5: **G02B 13/14**, G02B 23/00

(21) Application number: **88301191.8**

(22) Date of filing: **12.02.88**

(54) **Dual magnification infra-red telescope.**

(30) Priority: **13.02.87 GB 8703402**

(43) Date of publication of application:
**17.08.88 Bulletin 88/33**

(45) Publication of the grant of the patent:
**15.12.93 Bulletin 93/50**

(84) Designated Contracting States:
**DE FR IT NL SE**

(56) References cited:
**FR-A- 2 586 828**
**GB-A- 2 102 588**
**GB-A- 2 126 370**
**US-A- 4 383 727**

(73) Proprietor: **PILKINGTON P.E. LIMITED**
**Prescot Road**
**St. Helens Merseyside WA10 3TT(GB)**

(72) Inventor: **Roberts, Michael**
**5 Heol Elwy**
**Abergele Clwyd North Wales(GB)**
Inventor: **Crew, Philip Raymond**
**26 Aber Court**
**Prestatyn Clwyd North Wales(GB)**

(74) Representative: **Blatchford, William Michael et al**
**Withers & Rogers**
**4 Dyer's Buildings**
**Holborn**
**London EC1N 2JT (GB)**

Rank Xerox (UK) Business Services
(3.10/3.6/3.3.1)

# EP 0 278 777 B1

**Description**

This invention concerns improvements in or relating to infra-red telescopes and more particularly to dual magnification infra-red telescopes.

Normally infra-red telescopes have a zoom facility providing for variation in the magnification from, for example, x 5 to x 20 or more. The development history of such telescopes has been characterised by the goal of increasing compactness such that progressive designs have generally tended to decrease the axial length of the telescope whilst maintaining or even improving upon the optical performance characteristics. One such design is shown in UK patent 2126370B, which shows a mechanically compensated zoom lens having a magnification adjustable between a first low value and a second higher value, the lens comprising a fixed front lens component which at the higher magnification gives under-correct third and fifth order spherical aberration, a negative lens component which is movable relative to the front lens component and which at the higher magnification gives compensating over-correct third and fifth order spherical aberration, a positive lens component movable relative to the front lens component and the negative lens component, and a rear lens component fixed relative to the front lens component.

The afocal telescope lens described in UK patent 2126370B has typically an axial length of some 380 mm, thus representing for such a zoom telescope a particularly compact configuration.

The present invention has as its object the provision of a dual magnification telescope rather than a zoom telescope, which is also particularly compact, even when compared to the zoom telescope of UK patent 2126370B. The present invention resides in part in the appreciation that for some applications where a zoom requirement is not necessary but a dual magnification is, considerable compactness and simplification of the design can be achieved with the use of only a single lens element to provide focusing of the telescope at the two required magnifications but not specifically in between the two magnifications.

According to the invention, there is provided a compact dual magnification infra-red transmitting telescope which is settable either to a fixed first magnification value or to a fixed second magnification value, wherein the telescope comprises a front lens group of positive power, a rear lens group of positive power, an eyepiece lens group, and a single movable lens element located between the front lens group and the rear lens group, the movable lens element being of negative power and movable axially along the principal optical axis of the telescope from a first position at which the telescope has the first value of magnification to a second position at which the telescope has the second value of magnification, the telescope being substantially out of focus at intermediate positions of the movable lens element between the said first and second positions.

In order to compensate for optical aberrations at both magnification values, the front lens group may comprise a first positively powered lens element and a second negatively powered lens element.

The movable lens element component may conveniently be shaped to correct aberration contributions resulting from the front lens group at each value of magnification, such as by being of bi-concave form.

The rear lens group may conveniently include an achromatising lens element, such as a negative lens element, which may be of zinc selenide material. The rear lens group may further comprise a total of four lens elements, the first two of which are of positive power followed by an achromatising negative lens element, and then a fourth negative lens element, which fourth negative lens element may provide control over entrance pupil position to thereby minimise the entrance lens diameter requirement. Alternatively, the achromatising lens element of zinc selenide may constitute the second lens element of the rear lens group or even the first lens element of the lens group.

The eyepiece group may be of overall positive power and comprise three lens elements.

The overall telescope design may be substantially of germanium material, apart from the achromatising lens element in the rear lens group which, as stated, may conveniently be of zinc selenide material.

The telescope may be athermalised for focus by modification of the extremes of axial position of the single lens element. Alternatively, the front lens group or the rear lens group, or possibly both, may be movable for athermalisation purposes.

In this specification the terms "front" and "rear" are used in the sense that the front of the lens faces towards the object and the rear of the lens faces towards the exit pupil. Further, it will be appreciated that although the term "eyepiece" is used throughout, the ultimate image is in fact not viewed by the human eye, since it is in the infra-red region of the spectrum but is, for example, scanned across an infra-red detector array.

The lens may be particularly designed so that it operates within the 8-12 micron waveband and the materials of the lens elements are selected accordingly to have a useful transmission of radiation at the required relevant wavelengths. The spaces between the solid elements are preferably occupied by gas, conveniently air, and the refracting surfaces of the lens components are preferably all of spherical

2

curvature. The total length of the assembly of the lens groups can be as little as 220 mm or less.

Two preferred embodiments of the invention will now be described, by way of example only, with reference to the accompanying drawings in which:

Figure 1 is a schematic representation of a first embodiment of infra-red dual magnificiation telescope set to achieve a x 10 magnification,

Figure 2 is a schematic representation of the embodiment of Figure 1 but set to achieve a x 5 magnification,

Figure 3 is a schematic representation of a second embodiment of the invention set to achieve a x 10 magnification,

Figure 4 is a schematic representation of the embodiment of Figure 3 but set to achieve a x 3.5 magnification.

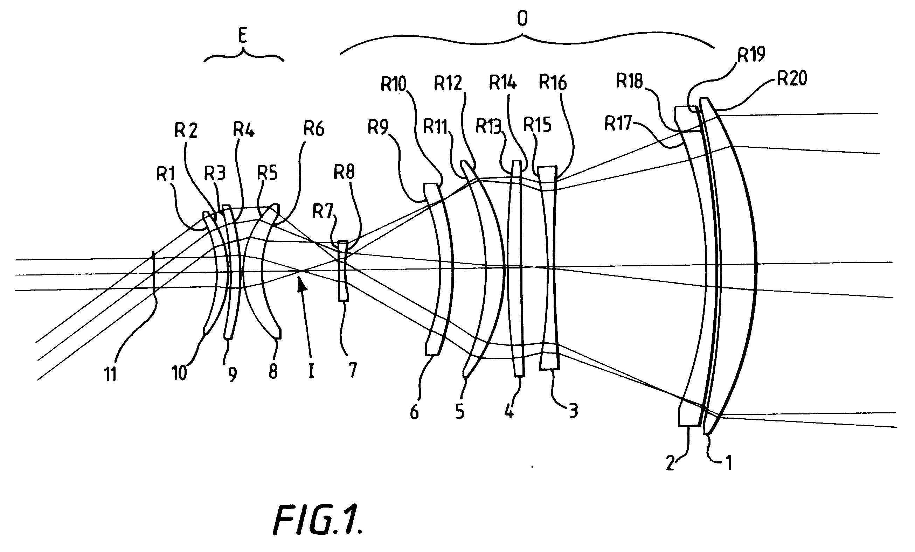

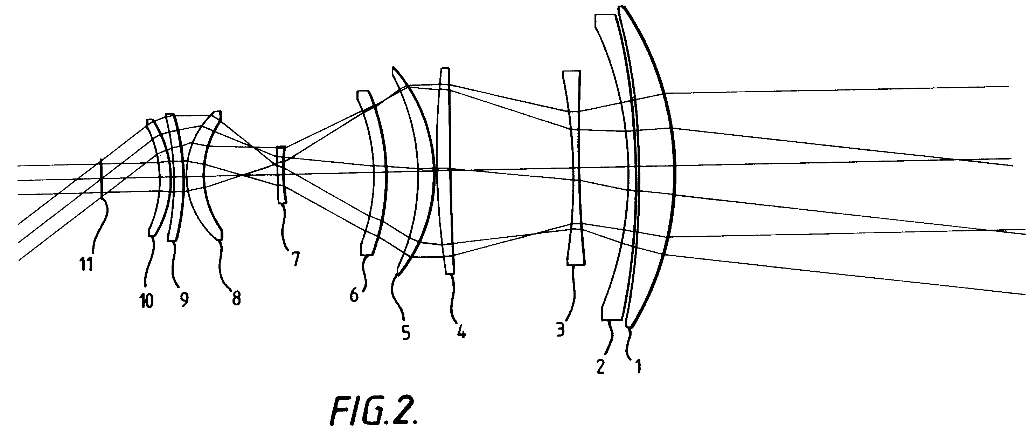

The infra-red dual magnification telescope shown in Figures 1 and 2 comprises an "eyepiece" lens combination generally indicated "E" and an objective lens combination generally indicated "O". The objective lens combination produces an intermediate real image indicated "I", which is "viewed" through the "eyepiece" lens combination.

The objective lens combination comprises a two-element doublet lens, the first element 1 of which is a meniscus element of positive power with its convex surface facing forwardly. Behind the element 1, the element 2 is of negative power and of meniscus shape convex towards the front. The group 1,2 is of overall positive power.

A negatively powered single lens element 3 of bi-concave form is provided for dual-magnification and is movable from the position shown in Figure 1, representing a x 10 magnification, to the position shown in Figure 2, representing a x 5 magnification.

The rear lens group of this embodiment of the invention comprises four lens elements, 4, 5, 6 and 7 respectively. Element 4 is of meniscus form with its concave surface facing forwardly. The element 5 is of meniscus form with its convex surface facing forwardly. Elements 4 and 5 are each of positive power. Element 6 is negatively powered and of meniscus form with its convex surface facing forwardly and, unlike the other lenses in the telescope, is of zinc selenide material in order to achromatise the telescope.

Lens element 7 is a negatively powered lens of meniscus form.

The eyepiece lens system comprises a positively powered meniscus lens element 8 with its concave surface facing forwardly, a positively powered meniscus lens element 9 with its convex surface facing forwardly and a positively powered meniscus lens element 10, also with its convex surface facing forwardly.

The exit pupil of the eyepiece lens group is shown at 11. In ordinary use, the radiation passing through the exit pupil would be incident on a detector for detecting incoming infra-red radiation.

In Figure 2 it will be seen that magnification has been reduced to x 5 by simply moving the single element lens component 3 forwardly from the position shown in Figure 1. Thus, apart from any minor movements of the forward lens group 1, 2 or the rearward lens group 4, 5, 6 and 7 for purposes of athermalisation, only the single element lens component 3 is required to move in this design of telescope configuration according to the invention. In practice, it will be found that in between the positions shown in Figure 1 and Figure 2, the telescope is substantially not in focus. Thus, the design according to the invention represents a simplified and particularly compact arrangement for a dual magnification infra-red telescope.

A particular example of lens in accordance with the embodiment shown with reference to Figure 1 has numerical data as follows, the refractive surfaces being indicated successively as R1 to R20 from the back of the telescope to the front of the telescope, the axial thickness/separation in the actual distance to the next succeeding surface and the dimensional units are in millimetres.

## Example 1

| Surface | Radius of Curvature | Axial thickness/ Separation at x 10 |
|---|---|---|
| R1 | -38.06 | 3.80 |
| R2 | -33.69 | 0.50 |
| R3 | -94.44 | 3.60 |
| R4 | -69.57 | 0.50 |
| R5 | 28.49 | 6.00 |
| R6 | 32.70 | 24.80 |
| R7 | 449.29 | 2.00 |
| R8 | 53.39 | 30.32 |
| R9 | -61.06 | 3.80 |
| R10 | -77.55 | 10.92 |
| R11 | -73.73 | 5.80 |
| R12 | -53.39 | 0.50 |
| R13 | 260.40 | 4.40 |
| R14 | 1127.57 | 8.52 |
| R15 | -200.45 | 2.20 |
| R16 | 449.29 | 48.96 |
| R17 | -115.59 | 2.80 |
| R18 | -225.87 | 0.86 |
| R19 | -239.50 | 11.50 |
| R20 | -102.64 | 0.00 |
| | Total: | 171.78 mm |

It will be understood that the axial separations between the surfaces R14/R15 and R16/R17 are dependent upon the magnification setting i.e. x 10 in the table. The corresponding axial separation for the x 5 magnification are, as between surfaces R14/R15 some 40.99 mm and as between surfaces R16/R17 some 16.48 mm. Thus, the single element lens component 3 has a range of axial movement between the x 10 setting and the x 5 setting of some 32.48 mm.

As stated previously, the above example has lens elements which are all made up of germanium with the exception of the achromatising element 6 which is of zinc selenide, although another suitable dispersive material, such as Chalcogenide glass designated BS1 (manufactured by Barr & Stroud Limited) could be used if desired. The spaces between the solid lens elements are air and the focal lengths of the lens elements are as follows:-

4

| Element | Focal Length (in millimetres) |
|---------|-------------------------------|
| 1 | 56.26 |
| 2 | -80.36 |
| 3 | -46.04 |
| 4 | 112.31 |
| 5 | 53.09 |
| 6 | -236.04 |
| 7 | -20.25 |
| 8 | 35.67 |
| 9 | 79.33 |
| 10 | 59.10 |

The "eyepiece" lens E consisting of elements 8, 9 and 10, has a focal length of 15.69. The fixed rear positive group consisting of elements 4, 5, 6 and 7 has a focal length of 24.81. The front positive group consists of elements 1 and 2 and has a focal length of 145.15.

The refractive surfaces R1 to R20 in the above example are all of spherical curvature and the lens is designed to operate over an 8 to 12 micron waveband.

Of particular significance is that the telescope according to the above example has an overall length from front to back, including the distance to exit pupil 11, of only about 192 mm. It will be appreciated by those skilled in the art that this represents considerable compactness in design, even when compared with conventional dual-magnification telescopes which operate in the visible portion of the spectrum.

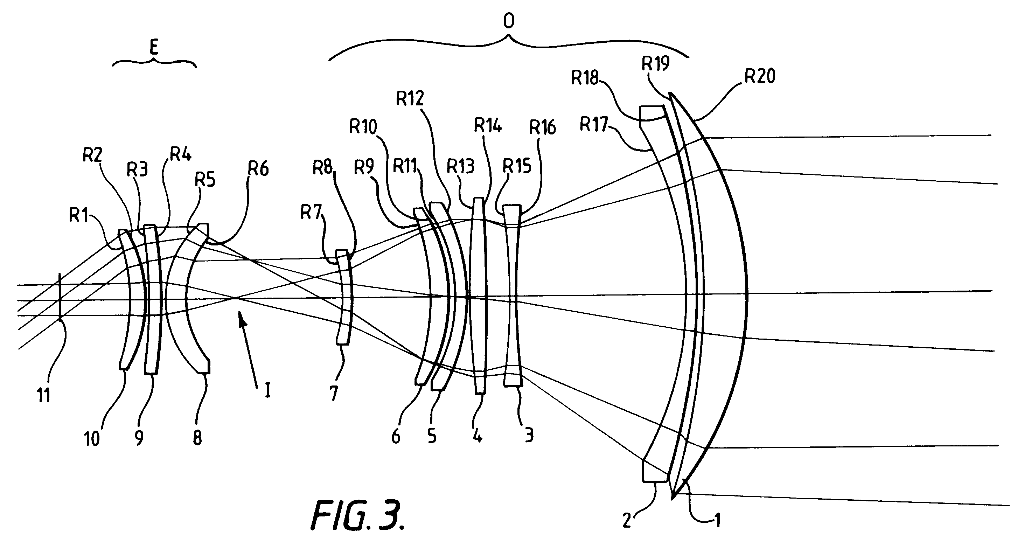

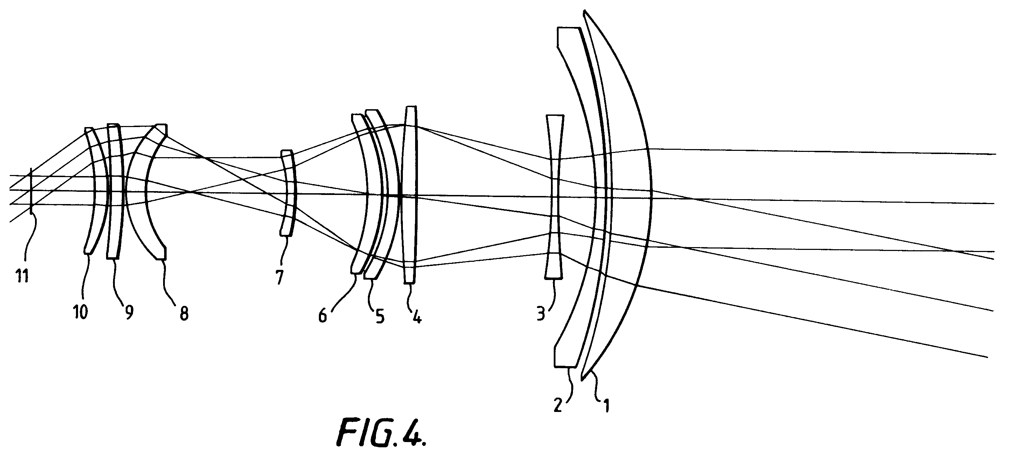

A further example in accordance with the embodiment shown in Figures 3 and 4 is of essentially similar design to that shown in Figures 1 and 2 with the exception that this second embodiment is designed to provide a dual magnification between x 10 and 3.5 and also that the achromatising lens element of zinc selenide is in this particular example lens element numbered 4, rather than 6 in the first embodiment. Corresponding numerals are used in the second embodiment of the example, to those used in the first embodiment.

The second embodiment of the invention has the following numerical data:

5

| Example 2 | | |
| --- | --- | --- |
| Surface | Radius of Curvature | Axial thickness/Separation |
| R1 | -57.15 | 4.57 |
| R2 | -43.85 | 1.00 |
| R3 | -195.17 | 4.57 |
| R4 | -136.17 | 0.50 |
| R5 | 31.22 | 7.27 |
| R6 | 31.22 | 50.56 |
| R7 | -42.29 | 3.05 |
| R8 | -70.20 | 25.16 |
| R9 | -70.20 | 5.84 |
| R10 | -53.99 | 2.00 |
| R11 | -51.17 | 3.81 |
| R12 | -60.23 | 0.50 |
| R13 | 250.31 | 5.84 |
| R14 | -842.76 | 7.60 |
| R15 | -202.42 | 2.17 |
| R16 | 251.61 | 54.52 |
| R17 | -108.25 | 3.81 |
| R18 | -183.92 | 2.00 |
| R19 | -197.84 | 13.60 |
| R20 | -100.00 | 0.00 |
| | | Total: $\overline{196.27}$ mm |

The axial separations between the surfaces R14/R15 and R16/R17 are given for the x 10 magnification setting. The corresponding axial separations for the x 3.5 magnification setting is, as between surfaces R14/R15 some 48.49 mm and as between surfaces R16/R17 some 13.63 mm. Thus, in this example the single element lens component 3 has a range of axial movement between the two magnification settings of some 40.89 mm. The focal lengths of the respective individual lens elements in the second example are as follows:-

| Element | Focal Length |
|---------|--------------|
| 1 | 60.97 |
| 2 | -91.04 |
| 3 | -37.22 |
| 4 | 64.52 |
| 5 | -320.63 |
| 6 | 61.29 |
| 7 | -38.57 |
| 8 | 59.52 |
| 9 | 143.54 |
| 10 | 49.87 |

The focal length of the "eyepiece" lens E consisting of elements 8,9 and 10 is 20.56. The focal length of the rear group consisting of elements 4,5,6 and 7 is 35.90. The focal length of the front group consisting of elements 1 and 2 is 136.41.

**Claims**

1. An infra-red transmitting telescope having a front lens group (1,2) of positive power, a rear lens group (4,5,6,7) of positive power, an eyepiece lens group (8,9,10), and movable lens means between the front lens group and the rear lens group for altering the magnification of the telescope, characterised in that the telescope is a dual magnification telescope, the movable lens means comprising a single movable lens element (3) which is of negative power and is movable axially along the principal optical axis of the telescope from a first position at which the telescope has a first fixed value of magnification to a second position at which the telescope has a second fixed value of magnification, the telescope being substantially out of focus at intermediate positions of the movable lens element (3) between the said first and second positions.

2. A telescope according to claim 1, characterised in that the front lens group comprises a first positively powered lens element (1) and a second negatively powered lens element (2).

3. A telescope according to claim 1 or claim 2, characterised in that the rear lens group (4,5,6,7) includes an achromatising lens element.

4. A telescope according to claim 3, characterised in that the rear lens group comprises four lens elements (4,5,6,7).

5. A telescope according to any preceding claim, characterised in that the eyepiece lens group is of positive power and comprises three lens elements (8,9,10).

6. A telescope according to claim 1, characterised in that the movable lens element (3) is shaped to correct aberration introduced by the front lens group (1,2).

7

**7.** A telescope according to any preceding claim, characterised by being operable in the 8 to 12µm waveband, at least the majority of its lens elements being of germanium material.

**8.** A telescope according to any preceding claim, characterised in that the assembly of the lenses of the telescope has an overall length of less than 220mm.

**9.** A telescope according to any preceding claim, characterised in that the relative position of the movable lens element (3) with respect to an element or elements of either or both of the front lens group (1,2) and the rear lens group (4,5,6,7) is variable by a small amount in comparison with the magnification-altering movement for athermalisation purposes.

**Patentansprüche**

**1.** Ein Infrarot-Transmissionsteleskop weist eine vordere Linsengruppe (1, 2) mit positiver Brechkraft, eine hintere Linsengruppe (4, 5, 6, 7) mit positiver Brechkraft, eine Augenlinsengruppe (8, 9, 10) und eine bewegbare Linseneinrichtung zwischen der vorderen Linsengruppe und der hinteren Linsengruppe zum Verändern der Vergrößerung des Teleskops auf,
**dadurch gekennzeichnet,** daß das Teleskop ein Teleskop mit zweifacher Vergrößerung ist, daß die bewegbare Linseneinrichtung ein einzelnes bewegbares Linsenelement (3) umfaßt, das negative Brechkraft aufweist und entlang der optischen Achse des Teleskops von einer ersten Position, an der das Teleskop einen ersten festen Vergrößerungswert aufweist, zu einer zweiten Position, an der das Teleskop einen zweiten festen Vergrößerungswert aufweist, axial bewegbar ist, und daß das Teleskop an Zwischenpositionen zwischen den ersten und zweiten Positionen des bewegbaren Linsenelements (3) weitgehend defokussiert ist.

**2.** Teleskop nach Anspruch 1, dadurch gekennzeichnet, daß die vordere Linsengruppe ein erstes Linsenelement (1) mit positiver Brechkraft und ein zweites Linsenelement (2) mit negativer Brechkraft umfaßt.

**3.** Teleskop nach Anspruch 1 oder 2, dadurch gekennzeichnet, daß die hintere Linsengruppe (4, 5, 6, 7) ein achromatisierendes Linsenelement umfaßt.

**4.** Teleskop nach Anspruch 3, dadurch gekennzeichnet, daß die hintere Linsengruppe vier Linsenelemente (4, 5, 6, 7) umfaßt.

**5.** Teleskop nach einem vorhergehenden Anspruch, dadurch gekennzeichnet, daß die Augenlinsengruppe positive Brechkraft aufweist und drei Linsenelemente (8, 9, 10) umfaßt.

**6.** Teleskop nach Anspruch 1, dadurch gekennzeichnet, daß das bewegbare Linsenelement (3) zum Korrigieren von durch die vordere Linsengruppe (1, 2) verursachter Aberration ausgebildet ist.

**7.** Teleskop nach einem der vorhergehenden Ansprüche, dadurch gekennzeichnet, daß es in dem 8 bis 12 µm-Wellenband betreibbar ist und daß zumindest die Mehrheit seiner Linsenelemente aus Germanium-Material besteht.

**8.** Teleskop nach einem vorhergehenden Anspruch, dadurch gekennzeichnet, daß der Aufbau der Linsen des Teleskops eine gesamte Länge von weniger als 220 mm aufweist.

**9.** Teleskop nach einem vorhergehenden Anspruch, dadurch gekennzeichnet, daß die relative Position des bewegbaren Linsenelements (3) bzgl. eines Elements oder Elementen einer oder sowohl der vorderen Linsengruppe (1, 2) als auch der hinteren Linsengruppe (4, 5, 6, 7) zu Athermalisierungszwecken um einen im Vergleich zu der Bewegung der Vergrößerungsveränderung kleinen Wert variierbar ist.

**Revendications**

**1.** Télescope pour transmettre l'infrarouge comportant un groupe de lentilles frontales (1,2) de puissance positive, un groupe de lentilles arrière (4,5,6,7) de puissance positive, un groupe de lentilles formant oculaire (8,9,10) et un moyen formant lentille mobile entre le groupe de lentilles frontales et de lentilles arrière pour modifier le grossissement du télescope, caractérisé en ce que le télescope est un

téléscope à double grossissement, le moyen formant lentille mobile comprenant un élément de lentille mobile unique (3) qui est de puissance négative et est mobile axialement selon l'axe optique principal du téléscope à partir d'une première position pour laquelle le téléscope a une première valeur fixée de grossissement vers une seconde position pour laquelle le téléscope a une seconde valeur fixée de grossissement, le téléscope étant sensiblement non mis au point pour les positions intermédiaires de l'élément de lentille mobile (3) entre ladite première et ladite seconde positions.

2. Téléscope selon la revendication 1, caractérisé en ce que le groupe de lentilles frontales porte un premier élément de lentille à puissance positive (1) et un second élément de lentille à puissance négative (2).

3. Téléscope selon la revendication 1 ou la revendication 2, caractérisé en ce que le groupe de lentilles arrière (4,5,6,7) comporte une lentille achromisante.

4. Téléscope selon la revendication 3, caractérisé en ce que le groupe de lentilles arrière comporte quatre éléments formant lentilles (4,5,6,7).

5. Téléscope selon l'une quelconque des revendications précédentes, caractérisé en ce que le groupe de lentilles formant oculaire est de puissance positive et comporte trois éléments formant lentilles (8,9,10).

6. Téléscope selon la revendication 1, caractérisé en ce que l'élément formant lentille mobile (3) a une forme telle qu'il corrige l'aberration introduite par le groupe de lentilles frontales (1,2).

7. Téléscope selon l'une quelconque des revendications précédentes, caractérisé en ce qu'il est susceptible de fonctionner dans la bande de longueurs d'onde de 8 à 12 $\mu$m, au moins la majorité de ses éléments formant lentilles étant en un matériau à base de germanium.

8. Téléscope selon l'une quelconque des revendications précédentes, caractérisé en ce que l'ensemble des lentilles du téléscope à une longueur hors-tout inférieure à 220 mm.

9. Téléscope selon l'une quelconque des revendications précédentes, caractérisé en ce que la position relative de l'élément mobile formant lentille (3) par rapport à un élément ou à des éléments de l'un des deux ou des deux groupe (1,2) et groupe de lentilles arrière (4,5,6,7) est variable d'une petite quantité en comparaison avec le mouvement qui modifie le grossissement pour tenir compte des variations de température.

FIG.1.

FIG.2.

EP 0 278 777 B1

*FIG. 3.*

FIG. 4.